# EUROPEAN PATENT APPLICATION

(11) **EP 2 770 665 A1**
(43) Date of publication of application: **27.08.2014**
(21) Application number: 12841566.8
(22) Date of filing: 20.03.2012
(51) Int. Cl.: H04L 12/18

(54) **METHOD FOR CREATING A GROUP**

(30) Priority: 18.10.2011 CN 201110316639
(71) Applicant: Xiaomi Inc., Beijing 100085 (CN)
(72) Inventor: LIN, Xingsheng, Beijing 100085 (CN); ZHANG, Pengfei, Beijing 100085 (CN); HONG, Feng, Beijing 100085 (CN); HUANG, Jiangji, Beijing 100085 (CN)
(74) Representative: Spachmann, Holger
(86) International application number: PCT/CN2012/072655
(87) International publication number: WO 2013/056529

(57) **Abstract**

The present disclosure relates to a method for creating groups, the method comprises a client setting up a condition for creating groups, and sending the condition to a server; the server searching the corresponding user information according to the conditions for creating groups, creating groups according to the corresponding user information, and sending the information of created groups to the client and also sending the information of created group to all users in the groups. The method for creating groups permits a user to find relevant individuals quickly and create groups easily, without need of multiple inputs or outputs; moreover, a higher matching degree of group members could improve the enthusiasm of group chats and also stimulate the users to invite their friends to the interactive experience.

## Description

### TECHNICAL FIELD

The present disclosure relates to the field of Internet technology, and more particular-ly to a method for creating groups.

### Background

Instant message software has become an indispensable software in the recreation and work of users, who require individual grouping functions due to different interactive circles.

Every individual has its own net friends and intends to group them for user-friendly management based on existing Internet products. Currently, a group must be created and named according to existing operating methods, and then all net friends are added into this group one by one.

Yet, it is difficult to create intended groups quickly by applying such a method, wherein the net friends must first be added to the list of friends, increasing the difficulty and complexity of creating groups and compromising the user's experience.

### Summary

The purpose of the present invention is to provide a method for creating groups, which permit a user to find relevant individuals quickly and create groups easily.

To this end, the present disclosure adopts the following technical scheme:
A: setting up a condition for creating groups by a client and sending said condition to a server;
B: searching corresponding user information by the server according to said condition for creating groups;
C: creating groups according to the corresponding user information by the server;
D: sending information of the created groups to said client by the server, and sending said information of the created groups to all users in said groups.

In still another embodiment, said condition for creating groups refers to a photo; said server searches the corresponding user information according to the human face in said photo.

In still another embodiment, said condition for creating groups refers to a user's characteristic information of said client, including: birthday, zodiac sign and/or stellar constellation information.

With the technical scheme of the present disclosure, a user can find relevant individuals quickly and create groups easily, without need of multiple inputs or outputs; moreover, a higher matching degree of group members could improve the enthusiasm of group chats and also stimulate the users to invite their friends in the interactive experience.

### BRIEF DESCRIPTION OF THE DRAWINGS

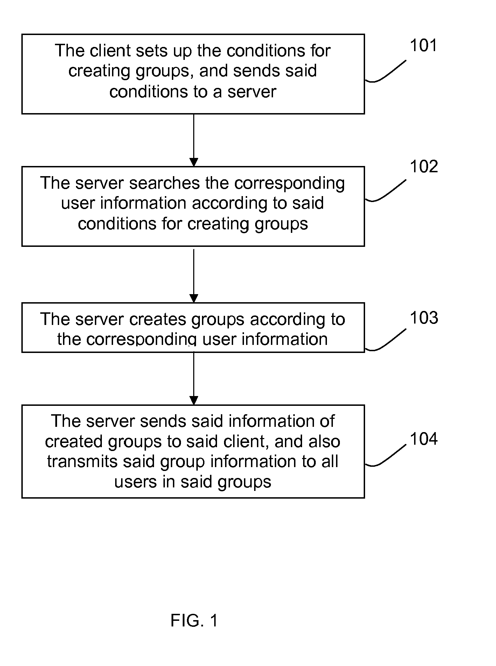

Figure 1 is a flow process chart of creating groups in the preferred embodiment of the present disclosure.

### Detailed Description of the embodiments

The preferred embodiment of the present disclosure is further described with reference to the accompanying drawings.
Figure 1 is a flow diagram illustrating the method for creating groups in accordance with some embodiments of the present disclosure. Referring to FIG. 1, the process of creating groups contains the following steps:
In step 101, the client sets up the condition for creating groups, and sends the condition to a server. There are a variety of conditions for creating groups, for instance, the condition for creating groups refers to a photo, allowing to create a group for all individuals in this photo; the condition for creating groups also refers to the user characteristic information of the client, including: birthday, Zodiac sign and/or stellar constellation information, allowing to create a group for those with the same Zodiac sign or stellar constellation information.
In step 102, the server searches the corresponding user information according to the condition for creating groups. For instance, if the condition for creating groups refers to a photo, the server searches for the corresponding user information according to the human face in the photo.
In step 103, the server creates a group according to the corresponding user information.
In step 104, the server feeds back information of created groups to the client, and broadcasts the group information to all users in the groups.
Given the special conditions for creating groups, the users in one group have a closer relationship, thereby enhancing their enthusiasm of group chats.

The above is a detailed description of the technical features of the present disclosure based on a typically preferred embodiment. However, it should be appreciated that the present disclosure is capable of a variety of embodiments and various modifications by those skilled in the art, and all such variations or changes shall be embraced within the scope of the following claims.

## Claims

1. A method for creating groups, comprising the following steps:
A: setting up a condition for creating groups by a client and sending said condition to a server;
B: searching corresponding user information by the server according to said condition for creating groups;
C: creating groups according to the corresponding user information by the server;
sending information of the created groups to said client by the server; and
D: sending said information of the created groups to all users in said groups.

2. The method as claimed in claim 1,wherein said condition for creating groups refers to a photo; and wherein the server searches for the corresponding user information according to the human face in said photo.

3. The method as claimed in claim 1 or claim 2, wherein the condition for creating groups refers to a user's characteristic information of said client, including: birthday, zodiac sign and/or stellar constellation information.
